# EUROPÄISCHE PATENTSCHRIFT

(11) **EP 0 658 136 B1**
(45) Veröffentlichungstag und Bekanntmachung des Hinweises auf die Patenterteilung: **26.02.1997**
(21) Anmeldenummer: 93919140.9
(22) Anmeldetag: 21.08.1993
(51) Int. Cl.: B29C 45/66, B29C 33/20, B22D 17/26

(54) **SCHLIESSEINHEIT FÜR FORMWERKZEUGE VON SPRITZGIESSMASCHINEN**
CLOSING UNIT FOR FORM TOOLS OF INJECTION MOULDING MACHINES
UNITE DE FERMETURE D'OUTILS DE FORMAGE POUR PRESSES D'INJECTION

(30) Priorität: 25.08.1992 DE 4228139; 11.12.1992 DE 4241820
(43) Veröffentlichungstag der Anmeldung: 21.06.1995
(73) Patentinhaber: Battenfeld Kunststoffmaschinen Ges.m.b.H., A-2542 Kottingbrunn (AT)
(72) Erfinder: HEINDL, Friedrich, A-2500 Baden (AT); BLEIER, Harald, A-2700 Wr. Neustadt (AT)
(74) Vertreter: Müller, Gerd, Dipl.-Ing.
(86) Internationale Anmeldenummer: EP9302256
(87) Internationale Veröffentlichungsnummer: WO9404337

(56) Entgegenhaltungen:
- EP-A- 0 164 419
- EP-A- 0 364 607
- US-A- 5 102 327
- US-A- 5 176 923

## Beschreibung

Die Erfindung betrifft eine Schließeinheit für Formwerkzeuge von Spritzgießmaschinen mit einer stationären Formträger- bzw. Basisplatte, einer relativ dazu durch Verschieben abstandsverstellbaren Formträgerplatte sowie einer Antriebsträgerplatte, die mit der stationären Formträger- bzw. Basisplatte durch Zugglieder, z. B. Holme, verbunden ist, welche zugleich als Schiebeführung für die bewegbare Formträgerplatte benutzbar sind, wobei als Stellantrieb für die bewegbare Formträgerplatte ein Elektromotor dient, der über eine Gewindespindel ein oder mehrere Kniehebelsysteme wechselweise zwischen einer Knicklage und einer Strecklage umstellt, welches bzw. welche zwischen der Antriebsträgerplatte und der bewegbaren Formträgerplatte eingebaut ist bzw. sind, und wobei in der Strecklage des bzw. der Kniehebelsysteme das Formwerkzeug zwischen den beiden Formträgerplatten unter Schließspannung gehalten ist.

Eine Schließeinheit dieser bekannten Art ist bspw. offenbart in der EP-A1-0 164 419. Dabei besteht die Besonderheit dieser bekannten Schließvorrichtung darin, daß der als Stellantrieb für die bewegbare Formaufspannplatte dienende elektrische Servomotor in der Strecklage des bzw. der Kniehebelsysteme mit einem Strom betrieben werden soll, welcher geringer als ein normaler Betriebsstrom ist. Allein hierdurch, also ohne Benutzung von Anschlägen, soll nach diesem Stand der Technik die Strecklage des bzw. der das Formwerkzeug zwischen den beiden Formträgerplatten unter Schließspannung haltenden Kniehebelsysteme gesichert werden. Bei der bekannten Schließeinheit ist es aber nicht nur nachteilig, daß der elektrische Servomotor auch in der Strecklage des bzw. der Kniehebelsysteme unter Strom - wenn auch unter vermindertem Strom - gehalten werden muß. Vielmehr erwachsen auch daraus Unzulänglichkeiten, daß der elektrische Servomotor und/oder das bzw. die von ihm als Kraftübertragungsmechanismus betätigten Kniehebelsysteme eine unsymmetrische Anordnung relativ zur Schließvorrichtung erhalten müssen.

Zur Ausräumung dieser Mängel der dem Stand der Technik angehörenden Schließvorrichtungen sieht die Erfindung vor,
- daß als Elektromtor ein flüssigkeitsgekühlter Servomotor,
   insbesondere ein AC-Synchron-Motor oder ein Drehstrom-Synchron-Motor vorgesehen ist, der eine Hohlwelle aufweist, innerhalb welcher über eine Mutter die Gewindespindel axial verschiebbar ist, die drehfest an dem oder den Kniehebelsystemen angreift.

Vorteilhaft bei dieser Ausgestaltung einer Schließeinheit ist, daß deren gesamtes Antriebs- und Kraftübertragungssystem in Fluchtlage mit bzw. symmetrisch zur Kraftachse derselben aufgebaut werden kann und sich daher sehr kompakt auslegen läßt.

Die Verwendung eines flüssigkeitsgekühlten, elektrischen Servomotors ist nicht nur vorteilhaft, weil dieser eine minimale Baugröße erhalten kann, vielmehr ist auch von Bedeutung, daß hierdurch im Stillstand sehr hohe Drehmomente aufgebracht werden können, durch die sich die Strecklage der Kniehebelsysteme gegen ortsfeste Anschläge optimal sichern läßt. Die durch das Wasser als Kühlmedium vom elektrischen Servomotor abgeführte Wärmeenergie kann zurückgewonnen und anschließend, bspw. zur Werkzeugtemperierung, genutzt werden. Es stellt sich somit eine Erhöhung des Gesamtwirkungsgrades der Spritzgießmaschine bzw. eine Einsparung von Energiekosten ein.

Bewährt hat sich erfindungsgemäß auch der Vorschlag, die der Gewindespindel zugeordnete Mutter innerhalb der Antriebsträgerplatte mit der Hohlwelle des Servomotor zu kuppeln. Ebenso hat es sich bewährt, die Gewindespindel drehfest mit einem an dem oder den Kniehebelsystemen angreifenden Kreuzkopf zu verbinden.

Schließeinheiten der gattungsgemäßen Art sind in der Regel mit einer den beiden Formträgerplatten zugeordneten Vorrichtung zur Werkzeugeinbauhöhenverstellung versehen. Das heißt, es sind Stellmittel vorhanden, mit deren Hilfe sich der Abstand zwischen der stationären Formträger- bzw. Basisplatte und der verstellbaren Formträgerplatte unbeeinflußt von den als Kraftübertragungsmechanismus benutzten Kniehebelsystemen variieren läßt. Für einen solchen Aufbau ist es nach der Erfindung ferner wichtig, daß als Antrieb der Werkzeugeinbauhöhenverstellvorrichtung ein Elektromotor vorgesehen ist, der an der Antriebsträgerplatte sitzt und ein ebenfalls an dieser gelagertes Stirnrad antreibt, welches wiederum mit Ritzeln kämmt, wobei je ein Ritzel mit je einer an der Antriebsträgerplatte axial unverschiebbar aber drehbar gelagerten Mutter gekuppelt ist, die mit einem Gewinde je eines der zwischen der stationären Formträger- bzw. Basisplatte und der Antriebsträgerplatte vorgesehenen Zugglieder wie z.B. Holme in Eingriff steht. Auch für eine solchermaßen ausgelegte Schließeinheit ist es von wesentlicher Bedeutung, daß das Antriebssystem und der zugehörige Kraftübertragungsmechanismus zur Ausübung der Schließspannung auf das Formwerkzeug in Fluchtlage bzw. symmetrisch zur Kraftachse der Schließeinheit vorgesehen werden kann, weil erst hierdurch der Einbauraum für die Werkzeugeinbauhöhenverstellvorrichtung an eine Antriebsträgerplatte normaler Größe verfügbar wird.

Eine besonders wirksame Auslegung erhält die Werkzeugeinbauhöhenverstellvorrichtung dann, wenn der Elektromotor mit einem Stirnradgetriebe versehen sowie mit einer Haltebremse ausgestattet ist.

Schließlich beruht eine wesentliche erfindungsgemäße Ausgestaltungsmaßnahme auch darauf, daß das Stirnrad der Werkzeugeinbauhöhenverstellvorrichtung von einem Ring gebildet ist, der durch an seinem Innenumfang angreifende Spur- bzw. Führungsrollen an der Antriebsträgerplatte gelagert ist. Hierdurch ergibt sich die besonders vorteilhafte Möglichkeit, daß das zum Öffnen und Schließen des Formwerkzeugs sowie auch zur Hervorbringung der Schließspannung desselben dienliche Antriebssystem und die Werkzeugeinbauhöhenverstellvorrichtung ohne gegenseitige Beeinträchtigung an der Antriebsträgerplatte der Schließeinheit montiert, demontiert, repariert, ausgetauscht und gewartet werden können. Die Neben- bzw. Ineinanderanordnung des Antriebssystems zum Öffnen und Schließen des Formwerkzeugs sowie der Werkzeugeinbauhöhenverstellvorrichtung an der Antriebsträgerplatte der Schließeinheit benötigt erfindungsgemäß nicht mehr Einbauraum, wie er beim Stand der Technik allein für den Antrieb des Formwerkzeug-Öffnungs- und Schließsystems benötigt wird.

In der Zeichnung ist der Gegenstand der Erfindung in einem Ausführungsbeispiel dargestellt. Dabei zeigen
- Figur 1: teils in der Seitenansicht und teils im Längsschnitt eine Schließeinheit für Formwerkzeuge von Spritzgießmaschinen und
- Figur 2: in schematisch vereinfachter Darstellung eine Ansicht auf die Schließeinheit nach Figur 1 etwa in der dort angedeutete Ebene II-II.

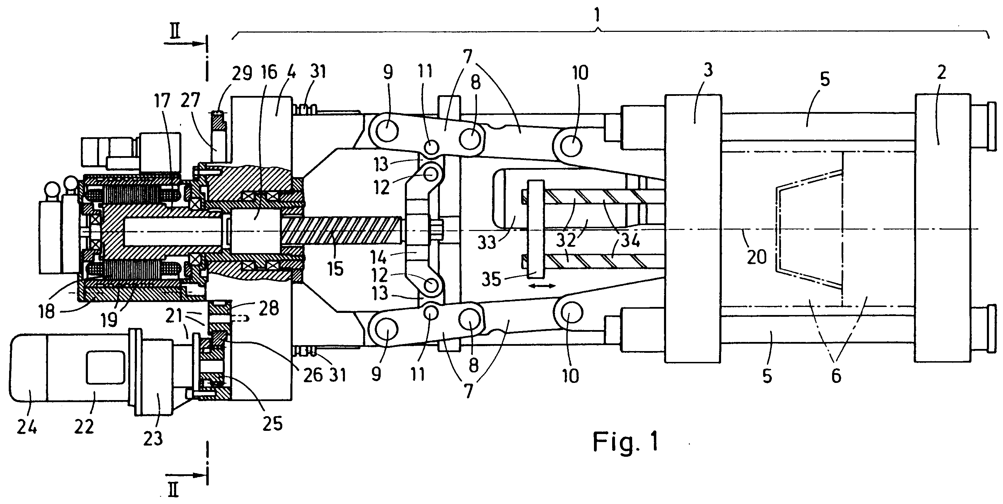

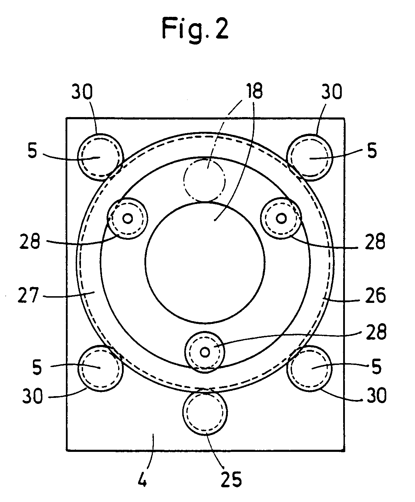

In Figur 1 der Zeichnung ist eine Schließeinheit 1 für Formwerkzeuge von Spritzgießmaschinen zu sehen, die eine stationäre Formträger- bzw. Basisplatte 2, eine relativ dazu durch Verschieben abstandsverstellbare Formträgerplatte 3 sowie eine Antriebsträgerplatte 4 aufweist. Die Antriebsträgerplatte 4 ist dabei mit der stationären Formträger- bzw. Basisplatte 2 durch mehrere parallele Zugglieder 5, bspw. durch vier Holme 5, verbunden, von denen in Figur 1 lediglich zwei, in Figur 2 jedoch alle vier zu sehen sind. Die Zugglieder bzw. Holme 5 können zugleich auch als Schiebeführung für die gegenüber der stationären Formträger- bzw. Basisplatte 2 abstandsverstellbare Formträgerplatte 3 benutzt werden.

Die Abstandsverstellung der bewegbaren Formaufspannplatte 3 relativ zur ortsfesten Formträger- bzw. Basisplatte 2 zwecks Öffnens und Schließens, des in Figur 1 nur strichpunktiert angedeutet Formwerkzeugs 6 sowie zur Aufrechterhaltung von dessen Schließspannung dienen als Kraftübertragungsmechanismen Kniehebelsysteme 7, welche zwischen der bewegbaren Formträgerplatte 3 und der Antriebsträgerplatte 4 eingebaut sind.

Bei dem in Figur 1 gezeigten Ausführungsbeispiel einer Schließeinheit 1 sind die Kniehebelsysteme 7 jeweils als sogenannte Fünfpunkt-Kniehebelsysteme ausgeführt, die außer einem Kniegelenk 8 und den beiden Endgelenken 9 und 10 noch zwei weitere Gelenke 11 und 12 umfassen, welche zu einer Verbindungslasche 13 gehören, über die sämtliche Kniehebelsysteme 7 mit einem gemeinsamen Kreuzkopf 14 gekuppelt sind. Am Kreuzkopf 14 greift drehfest bzw. drehgesichert eine Gewindespindel 15 an, welche mit einer Mutter 16 in Eingriff steht, die axial unverschiebbar, aber drehantreibbar in der Antriebsträgerplatte 4 aufgenommen ist. Zum Zwecke ihres Drehantriebs ist die Mutter 16 mit der Hohlwelle 17 eines Elektromotors 18 gekuppelt, welcher an die Außenseite der Antriebsträgerplatte 4 angeflanscht ist, wobei seine Hohlwelle 17 eine solche Innenabmessung hat, daß sie geeignet ist, die gesamte, nach hinten aus der Mutter 16 ausfahrbare Länge der Gewindespindel 15 problemlos aufzunehmen. Der Elektromotor 18 ist insbesondere als AC-Synchron-Motor oder auch als Drehstrom-Synchron-Motor ausgelegt sowie mit einer Flüssigkeitskühlung 19 versehen, damit er trotz einer hohen Leistungsdichte eine kompakte Bauart erhalten kann.

Erkennbar ist aus Figur 1 der Zeichnung deutlich, daß die Kniehebelsysteme 7 symmetrisch, die Gewindespindel 15, die Mutter 16 und der Elektromotor 18 mit seiner Hohlwelle 17 fluchtend mit der Kraftachse 20 der Schließeinheit 1 vorgesehen sind. Bei optimaler Arbeitsweise der Schließeinheit erhält diese daher eine sehr gedrängte Bauart.

Schließeinheiten 1, die als Kraftübertragungsmechanismen Kniehebelsysteme 7 benutzen, benötigen für die allfällig durchzuführende Werkzeugeinbauhöhenverstellung zwischen der stationären Formträger- bzw. Basisplatte 2 und der beweglichen Formträgerplatte 3 eine besondere Werkzeugeinbauhöhenverstellvorrichtung 21. Diese Werkzeugeinbauhöhenverstellvorrichtung 21 ist dabei derjenigen Seite der Antriebsträgerplatte 4 zugeordnet, an der sich auch der Elektromotor 18 für den Antrieb der Kniehebelsysteme 7 befindet.

Auch als Antrieb für die Werkzeugeinbauhöhenverstellvorrichtung 21 ist ein Elektromotor 22 vorgesehen, welcher an der Antriebsträgerplatte 4 sitzt, bspw. mit dieser verflanscht ist. Er kann einerseits auf ein Stirnraduntersetzungsgetriebe 23 arbeiten und andererseits mit einer Haltebremse 24 ausgestattet werden, wie das in Figur 1 zu sehen ist. Das Stirnraduntersetzungsgetriebe 23 hat ein Abtriebsritzel 25, das wiederum mit einem Stirnrad 26 kämmt, welches an der Antriebsträgerplatte 4 gelagert ist. Dabei wird dieses Stirnrad 26 von einem Ring 27 gebildet, welcher durch an seinem Innenumfang angreifende Spur- bzw. Führungsrollen 28 an der Außenseite der Antriebsträgerplatte 4 gelagert ist, wobei in Figur 1 nur eine solche Spur- bzw. Führungsrolle zu sehen ist. Diese greift dabei am Innenumfang des Rings 27 an einer dem Abtriebsritzel 25 gegenüberliegenden Stelle an, um den gegenseitigen Antriebseingriff zu sichern. Mindestens zwei weitere solcher Spur- bzw. Führungsrollen 28 arbeiten gleichmäßig zur ersten Spur- bzw. Führungsrolle 28 winkelversetzt mit dem Innenumfangs des Rings 27 bzw. des Stirnrades 26 zusammen, wie das deutlich aus Figur 2 der Zeichnung hervorgeht. Das als Ring 27 ausgeführte Stirnrad 26 der Werkzeugeinbauhöhenverstellvorrichtung 21 hat nicht nur einen Innendurchmesser, welcher größer ist als die Außenkontur des Elektromotors 18 und der daran sitzenden Zusatzaggregate. Vielmehr weist der Ring 27 mit seiner äußeren Umfangsverzahnung 29 auch einen solchen Durchmesser auf, daß er gleichzeitig und ständig mit vier Ritzeln 30 kämmt, von denen jedes wiederum mit einer Stellmutter 31 gekuppelt ist. Die Stellmuttern 31 sitzen drehbar aber axial unverschiebbar in der Antriebsträgerplatte 4 und stehen mit Gewinden an den Zwischengliedern bzw. Holmen 5 in Dauereingriff, welche die Verbindung der stationären Formträger- bzw. Basisplatte 3 mit der Antriebsträgerplatte 4 herstellen und aufrechterhalten.

Durch Betrieb des Elektromotors 21 läßt sich über die Werkzeugeinbauhöhenverstellvorrichtung 21 der Abstand der Antriebsträgerplatte 4 relativ zur Formträger- bzw. Basisplatte 2 der Schließeinheit 1 variieren, und zwar mit der Folge, daß über die zwischen der Antriebsträgerplatte 4 und der bewegbaren Formträgerplatte 3 vorgesehenen Kniehebelsysteme 7 auch eine entsprechende Abstandsänderung der bewegbaren Formträgerplatte 3 von der stationären Formträger- bzw. Basisplatte 2 eintritt und auf diese Art und Weise eine Anpassung an unterschiedliche Einbauhöhen der Formwerkzeuge 6 möglich ist.

Mit Hilfe der Werkzeugeinbauhöhenverstellvorrichtung 21 ist es auch möglich, eine Beeinflussung der Schließspannung am Formwerkzeug 6 herbeizuführen, bspw. dadurch, daß kurz vor Erreichen der Strecklage der als Kraftübertragungsmechanismen benutzten Kniehebelsysteme 7 noch der Abstand der Antriebsträgerplatte 4 von der stationären Formträger- bzw. Basisplatte 2 geringfügig vermindert wird.

Aus Figur 1 geht noch hervor, daß die Spur- bzw. Führungsrollen 28 für den Ring 27 einen äußeren und einen inneren Spurkranz aufweisen, welche das Stirnrad 26 axial in seiner Rotationsebene fixieren. Erkennbar ist aus den Figuren 1 und 2 aber auch, daß einerseits der Elektromotor 18 für die Betätigung der Kniehebelsysteme 7 und andererseits die Werkzeugeinbauhöhenverstellvorrichtung 21 an der Außenseite der Antriebsträgerplatte 4 eine Anordnung haben, die eine gegenseitige Beeinträchtigung bei der Montage, Demontage, Wartung und beim Austausch wirksam vermeiden.

Aus Figur 1 läßt sich schließlich noch entnehmen, daß auch die Ausstattung der bewegbaren Formträgerplatte 3 der Schließeinheit 1 mit einem Auswerfer 32 ohne weiteres möglich ist. Dabei kann als Antrieb für den Auswerfer 32 ebenfalls ein Elektromotor 33 dienen, der mehrere Gewindespindeln 34 betätigt, welche wiederum mit einer Auswerferplatte 35 in Eingriff stehen.

Der Auswerfer 32 kann dabei als eine eigenständige Einheit ausgebildet werden, die sich (auch nachträglich) der bewegbaren Formträgerplatte 3 einer beliebigen Schließeinheit 1 zuordnen läßt.

## Patentansprüche

1. Schließeinheit (1) für Formwerkzeuge (6) von Spritzgießmaschinen
- mit einer stationären Formträger- bzw. Basisplatte (2),
- einer relativ dazu durch Verschieben abstandsverstellbaren Formträgerplatte (3)
- sowie einer Antriebsträgerplatte (4),
- die mit der stationären Formträger- bzw. Basisplatte (2) durch Zugglieder (5), z. B. Holme, verbunden ist,
- welche zugleich als Schiebeführung für die bewegbare Formträgerplatte (3) benutzbar sind,
- wobei als Stellantrieb für die bewegbare Formträgerplatte (3) ein Elektromotor (18) dient,
- der über eine Gewindespindel (15) ein oder mehrere Kniehebelsysteme (7) wechselweise zwischen einer Knicklage und einer Strecklage umstellt,
- welches bzw. welche Kniehebelsysteme zwischen der Antriebsträgerplatte (4) und der bewegbaren Formträgerplatte (3) eingebaut ist bzw. sind,
- und wobei in der Strecklage des bzw. der Kniehebelsysteme (7) das Formwerkzeug (6) zwischen den beiden Formträgerplatten (2 und 3) unter Schließspannung gehalten ist,
**dadurch gekennzeichnet,**
- daß als Elektromotor ein flüssigkeitsgekühlter (19) Servomotor (18) - insbesondere ein AC-Synchron-Motor oder ein Drehstrom-Synchron-Motor - vorgesehen ist,
- der eine Hohlwelle (17) aufweist,
- innerhalb welcher über eine Mutter (16) die Gewindespindel (15) axial verschiebbar ist,
- die drehfest an dem oder den Kniehebelsystemen (7) angreift.

2. Schließeinheit nach Anspruch 1,
**dadurch gekennzeichnet,**
daß die der Gewindespindel (15) zugeordnete Mutter (16) innerhalb der Antriebsträgerplatte (4) mit der Hohlwelle (17) des Servomotors (18) gekuppelt ist.

3. Schließeinheit nach einem der Ansprüche 1 und 2,
**dadurch gekennzeichnet,**
daß die Gewindespindel (15) drehfest mit einem an dem oder den Kniehebelsystemen (7) angreifenden Kreuzkopf (14) verbunden ist.

4. Schließeinheit nach einem der Ansprüche 1 bis 3 mit einer den beiden Formträgerplatten zugeordneten Vorrichtung zur Werkzeugeinbauhöhenverstellung,
**dadurch gekennzeichnet,**
daß als Antrieb der Werkzeugeinbauhöhenverstellvorrichtung (21) ein Elektromotor (22) vorgesehen ist, der an der Antriebsträgerplatte (4) sitzt und ein ebenfalls an dieser gelagertes Stirnrad (26) antreibt, welches wiederum mit Ritzeln (30) kämmt, wobei je ein Ritzel (30) mit je einer an der Antriebsträgerplatte (4) axial unverschiebbar aber drehbar gelagerten Mutter (31) gekuppelt ist, die mit einem Gewinde je eines der zwischen der stationären Formträger- bzw. Basisplatte (2) und der Antriebsträgerplatte (4) vorgesehenen Zugglieder (5) in Eingriff steht.

5. Schließeinheit nach Anspruch 4,
**dadurch gekennzeichnet,**
daß der Elektromotor (22) mit einem Stirnradgetriebe (23) versehen sowie mit einer Haltebremse (24) ausgestattet ist.

6. Schließeinheit nach einem der Ansprüche 4 und 5,
**dadurch gekennzeichnet,**
daß das Stirnrad (26) von einem Ring (27) gebildet ist, der durch an seinem Innenumfang angreifende Spur- bzw. Führungsrollen (28) an der Antriebsträgerplatte (4) gelagert ist.

## Claims

1. Closing unit (1) for mould tools (6) of injection moulding machines
- with a stationary mould carrier or base plate (2),
- a mould carrier plate (3) adjustable in spacing relative thereto by displacement
- as well as a drive carrier plate (4),
- which is connected with the stationary mould carrier plate or base plate (2) by tension members (5), for example posts,
- which are usable at the same time as displacement guide for the movable mould carrier plate (3),
- wherein an electric motor (18) serves as setting drive for the movable mould carrier plate (3),
- which by way of a threaded spindle (15) changes over one or more toggle lever systems (7) alternatingly between a folded position and an extended position,
- which toggle lever system or systems is or are incorporated between the drive carrier plate (4) and the movable mould carrier plate (3),
- and wherein in the extended position of the toggle lever system or systems (7) the mould tool (6) is held between the two mould carrier plates (2 and 3) under closing tension,
characterised thereby
- that a liquid-cooled (19) servomotor (18) - especially an AC synchronous motor or a direct current synchronous motor - is provided as electric motor,
- which comprises a hollow shaft (17),
- within the threaded spindle (15) is axially displaceable by way of a nut (16),
- which engages in rotationally fast manner at the toggle lever sytem or systems (7).

2. Closing unit according to claim 1, characterised thereby that the nut (16) associated with the threaded spindle (15) is coupled with the hollow shaft (17) of the servomotor (18) within the drive carrier plate (4).

3. Closing unit according to one of claims 1 and 2, characterised thereby that the threaded spindle (15) is connected in rotationally fast manner with a crosshead (14) engaging at the toggle lever system or systems (7).

4. Closing unit according to one of claims 1 to 3 with a device, which is associated with the two mould carrier plates, for adjustment of tool installation height, characterised thereby that provided as drive of the device (21) for adjustment of tool installation height is an electric motor (22), which is seated at the drive carrier plate (4) and drives a gearwheel (26) which is similarly mounted at this and which in turn meshes with pinions (30), wherein each pinion (30) is coupled with a respective nut (31), which is mounted at the drive carrier plate (4) to be axially displaceable but rotatable and which stands in engagement with a thread of a respective tension element (5) provided between the stationary mould carrier plate or base plate (2) and the drive carrier plate (4).

5. Closing unit according to claim 4, characterised thereby that the electric motor (22) is provided with a gearwheel transmission (23) as well as equipped with a blocking brake (24).

6. Closing unit according to one of claims 4 and 5, characterised thereby that the gearwheel (26) is formed by a ring (27), which is mounted, by track rollers or guide rollers (28) engaging at its inner circumference, at the drive carrier plate (4).

## Revendications

1. Unité de fermeture (1) d'outils de formage (6) de machines de moulage par injection
- comportant une plaque fixe de support de moule ou de socle (2),
- une plaque de support de moule (3) réglable en distance par rapport à celle-ci, par déplacement,
- ainsi qu'une plaque de support du dispositif d'entraînement (4)
- qui est reliée à la plaque fixe de support de moule ou de socle (2) par des organes de traction (5), par exemple des longerons,
- qui sont également utilisables comme guides de déplacement de la plaque de support de moule déplacable (3),
- le dispositif de positionnement de la plaque de support de moule déplaçable (3) consistant en un moteur électrique (18)
- qui régle, via une broche filetée (15), un ou plusieurs dispositifs à genouillère (7) alternativement entre une position pliée et une position étendue,
- le ou les dispositifs à genouillère étant monté(s) entre la plaque de support du dispositif d'entraînement (4) et la plaque de support de moule (3) déplaçables,
- et l'outil de formage (6) étant maintenu sous pression de fermeture entre les deux plaques de support (2 et 3), lorsque le ou les dispositifs à genouillère est/sont en position étendue
caractérisée en ce que
- le moteur électrique est un servomoteur (18) refroidi par un fluide (19), notamment un moteur synchrone AC ou un moteur synchrone à courant alternatif triphasé,
- qui comporte un arbre creux (17)
- dans lequel la broche filetée (15) est axialement déplaçable moyennant un écrou (6),
- la broche filetée (15) agissant de façon fixe en rotation sur le dispositif à genouillère (7).

2. Unité de fermeture selon la revendication 1,
caractérisée en ce que l'écrou (16) associé à la broche filetée (15) est couplé à l'arbre creux (17) du servomoteur (18), dans la plaque de support du dispositif d'entraînement (4).

3. Unité de fermeture selon l'une des revendications 1 et 2,
caractérisée en ce que la broche filetée (15) est reliée de façon fixe en rotation à l'aide d'une tête ou croix (14) au(x) dispositif(s) à genouillère (7).

4. Unité de fermeture selon l'une des revendications 1 à 3, comportant un dispositif pour le réglage en hauteur de l'outil, associé aux deux plaques de support,
caractérisée en ce qu'elle comporte un moteur électrique (22) pour l'entraînement du dispositif de régalge en hauteur de l'outil (21), qui est monté sur la plaque de support du dispositif d'entraînement (4) et entraîne un pignon (26) qui y est agencé et qui s'éngrène avec des pignons (30), chaque fois un pignon (30) étant couplé à chaque fois un écrou (31) qui est logé de façon fixe en déplacement axial mais rotative sur la plaque de support du dispositif d'entraînement (4) et qui interagit avec un filet de chaque fois l'un des organes de traction (5) agencés entre la plaque de support fixe du mole ou de socle (2) et la plaque de support du dispositif d'entraînement 4.

5. Unité de fermeture selon la revendication 4,
caractérisée en ce que le moteur électrique (22) est muni d'un réducteur à pignons droits (23) et d'un frein de maintien (24).

6. Unité de fermeture selon l'une des revendications 4 et 5,
caractérisée en ce que le pignon (26) est formé par une bague (27) qui est logée sur la plaque de support du dispositif d'entraînement (4) par l'intermédiaire de rouleaux conducteurs ou de guidage (28) qui agissent sur la circonférence interieure de ladite bague
